# EUROPEAN PATENT SPECIFICATION

(11) **EP 1 380 401 B1**
(45) Date of publication and mention of the grant of the patent: **27.07.2016**
(21) Application number: 02707157.0
(22) Date of filing: 26.03.2002
(51) Int. Cl.: B29C 47/14, B29K 711/14, B29K 311/10, B29L 7/00, B29K 711/12, B29K 29/00, B29K 105/04, B29K 105/06, B29K 105/26

(54) **METHOD FOR PRODUCING FOAMED MOLDINGS**
VERFAHREN ZUR HERSTELLUNG VON GESCHÄUMTEN FORMTEILEN
PROCEDE DE PRODUCTION DE PRODUITS MOULES EXPANSES

(30) Priority: 29.03.2001 JP 2001095628; 29.03.2001 JP 2001095629
(43) Date of publication of application: 14.01.2004
(73) Proprietor: Suzuki Kogyo Co. Ltd., Wakabayashi-ku, Sendai-shi, Miyagi 984-0002 (JP)
(72) Inventor: MARUYAMA, Noboru, c/o IND. TECHNOLOGY INSTITUTE, Sendai-shi, Miyagi 981-3206 (JP); ARISUMI, Kazuhiko, c/o IND. TECHNOLOGY INSTITUTE, Sendai-shi, Miyagi 981-3206 (JP); SUZUKI, Noboru, c/o SUZUKI KOGYO CO. LTD., Sendai-shi, Miyagi 984-0002 (JP); SONE, Terunori, c/o SUZUKI KOGYO CO. LTD., Sendai-shi, Miyagi 984-0002 (JP); IZUMI, Takeshi, c/o SUZUKI KOGYO CO. LTD., Sendai-shi, Miyagi 984-0002 (JP); TOSHIMA, Hiraku, c/o SUZUKI KOGYO CO. LTD., Sendai-shi, Miyagi 984-0002 (JP); KITADA, Kazumasa, c/o MITSUBISHI KAKOKI KAISHA LTD, Kawasaki-shi, Kanag awa 210-8560 (JP); HASOME, Akinori, c/o MITSUBISHI KAKOKI KAISHA LTD., Kawasaki-shi, Kanagawa 210-8560 (JP); SASAKI, Shin-ichiro, c/o MITSUBISHI KAKOKI KAISHA, Kawasaki-shi, Kanagawwa 210-8560 (JP)
(74) Representative: Henkel, Breuer & Partner
(86) International application number: PCT/JP2002/002896
(87) International publication number: WO 2002/078931

(56) References cited:
- EP-A1- 0 925 900
- WO-A-00/76937
- WO-A-99/33629
- DE-A1- 4 207 233
- DE-C1- 4 008 862
- JP-A- 4 135 730
- JP-A- 6 093 124
- JP-A- 6 107 835
- JP-A- 8 216 122
- JP-A- 9 124 074
- JP-A- 11 169 121
- JP-A- 11 198 970
- JP-A- 62 081 432
- JP-A- 2000 176 495
- JP-A- 2000 186 166
- US-A- 3 542 640
- US-A- 4 613 627

## Description

### Technical Field

The present invention relates to a method for producing foamed molding, and particularly to a method for producing foamed moldings which is suitably used for recycling of fibrous materials such as used paper.

### Background Art

In place of plastic cushioning materials represented by expanded polystyrene widely used at present, attention has been drawn to cushioning materials of the paper family obtained by recycling of used paper as environmentally friendly cushioning materials. For recycling of used paper, a cushioning material of the paper family excellent in elastic performance and a method for producing the same are disclosed in Japanese Patent No. 3038158, and a method for producing a foam for producing the above-mentioned cushioning material and an apparatus for producing the same are disclosed in Japanese Patent No. 3017716. As for the cushioning material described in Japanese Patent Nos. 3038158 and 3017716 described above, it is described that a used paper powder, water, a binder containing 50% by weight or more of gelatin, a crosslinking reaction accelerator and a softening agent are mixed and foamed, followed by molding and drying to produce the cushioning material. However, both the patents do not specifically describe production apparatus and production methods in all processes from the used paper, a raw material, to the production of the cushioning material, a product. In particular, the production method specifically disclosed in Japanese Patent No. 3038158 describes the composition of raw materials and compounding adjustment, but there are no specific descriptions for production processes of kneading, foaming, molding and drying. For the drying, a general method is touched on, but specific conditions are not disclosed. For the foaming and the molding, there are only the description that the foaming and the molding are conducted in a mold form and the description that heat drying is desirably conducted at 40°C or less from the fear of gelatin melting, which causes necessity of drying for several days. Thus, no technique suitable for industrial production has not attained yet. Further, Japanese Patent No. 3017716 describes operating conditions of a foaming device used for foaming a kneaded product, but the methods and processed of molding and drying important for producing foamed moldings are not touched on at all.

As described above, in the prior art, not only a basic process showing by what production method foamed moldings can be obtained as products is not clearly shown, but also the whole production methods and the whole production methods which can perform industrial production economically and continuously are not described at all.

On the other hand, the grade standards of the qualities of gelatin and glue are stipulated in JIS K6503, and the jelly strength is specified as 250 Bloom or more for the first kind, and as 50 Bloom or more for the fifth kind. The jelly strength is an important factor for determining the qualities of gelatin and glue, and exerts a great influence on their properties. However, no jelly strength is described in the above-mentioned patents at all. Actually, however, when the jelly strength of a binder such as gelatin is less than 130 Bloom, disadvantages shown in the following (1) to (3) arise.
(1) The binder is liable to flow, which causes bonding force with a fibrous material such as opened used paper to decrease.
(2) The dispersibility and retention of air are lowered to break foams' in molding, resulting in the generation of depressions in a pockmark form on a surface of the foamed molding, thereby detracting it from the appearance as a product.
(3) Voids are liable to occur in the inside of the foamed molding, and lower the strength of the foamed molding.

Further, the grade standards of the qualities of gelatin and glue are stipulated in JIS K6503, and the fat and oil content is specified as 0.5% by weight or less for gelatin, and as 1% by weight or less for glue, regardless of the first to fifth kinds. The fat and oil content is an important factor for determining the qualities of gelatin and glue, and exerts a great influence on their properties. However, no fat and oil content is described in the above-mentioned patents at all. Actually, however, when fats and oils are contained in an amount exceeding 0.3% by weight, air bubbles are difficult to be incorporated into a kneaded product in preliminary kneading in which an aqueous solution containing the fibrous material such as opened used paper and the binder such as gelatin is slowly stirred, so that the specific gravity of the foamed molding of the product can not be controlled, which causes high cost.

Further, the degree of foaming is also not described in the above-mentioned patents at all. However, actually, when the foaming height at the time when one minute has elapsed after stirring of the aqueous solution is less than 2 mm, air bubbles in the kneaded product is few. Similarly to the above-mentioned fat and oil content, the specific gravity of the foamed molding of the product can not be controlled, which causes high cost.

WO00/76937A discloses a method and an apparatus for forming a gypsum wallboard core, wherein the process includes a mixer which mixes dry and wet ingredients making up a gypsum slurry and discharges the formed slurry through a die. A pre-generated foamed ingredient may be added to the slurry in the mixer. The slurry which exits the die is extruded directly onto a surface of a conveyor belt. Downstream of the conveyor belt a hybrid dryer that includes microwave heating and connection drying sections is provided.

JP06107835A discloses an adsorbent pulp foam and its production. This foam is produced by mixing pulp containing a reclaimed pulp with a biodegradable thickener, a chemical blowing agent, an adsorbent material and water, molding and thermally blowing the mixture and drying the resulting foam.

DE 4207233 A1 discloses a method of producing porous filter bodies by the steps that paper and/or cardboard are mixed with water, the mixture is stirred and foamed by introducing air thereinto to obtain a foamy slurry of paper fiber, and the resulting slurry is subjected to drying to form an open-pore filter block. For hardening the filter block, CaO powder in an excess amount of a stoichiometric amount is supplied into the thickened and foamed paper-fiber containing slurry. In an alternative this document describes the forming of paper-fiber pellets by extruding the foaming paper-fiber slurry through a perforated plate or a perforated sieve to obtain partly dehydrated, foamed paper-fiber pellets, followed by sprinkling the CaO powder over the still wet foamed pellets and baking them together to provide a filter block.

US 3,542,640 discloses a method for drying a wet foam containing randomly dispersed fibers to produce a dry fibrous paper or sponge-like material of low density. The method comprises (a) heating the wet foam to a temperature of about 49°C, (b) depositing the heated foam as a sheet of uniform thickness on a foraminous support, (c) draining said sheet to remove from about 75% to about 85% of the water in said foam, and (d) removing the remaining water in said sheet by phase change whereby said water is vaporized. In a preferred embodiment, step (d) comprises blowing a hot gas through the foam sheet, wherein said hot gas typically has a temperature of from about 93°C to about 204°C.

The present invention has been made, paying attention to such conventional problems, and provides a production method as defined in claim 1, comprising kneading, foaming, molding and drying. The present invention further provides specifically conditions for drying a foamed product formed.

This provides a production method which can produce a foamed molding such as a cushioning material excellent in elastic performance from a fibrous material, particularly which
can produce an environmentally friendly foamed molding having biodegradability or biodisintegrability, using a fibrous material such as used paper, a natural product, as a raw material, economically, continuously and in large amounts.

Further, in the production of a wide, uniformly thick, plate-like foamed molding, the present invention provides a method for producing the foamed molding which do not generate depressions in a pockmark form on a surface thereof, have no fear of detracting it from the appearance as a product, furthermore, make it difficult to develop voids in the inside of the foamed molding, also make it possible to increase the strength of the foamed molding, further, decrease the specific gravity of the foamed molding, and improve the yield in the production of a cushioning material and the like excellent in elastic performance, thereby being able to produce the foamed molding economically, continuously and in large amounts, and a foamed molding produced thereby.

Further, the present invention provides a foamed molding as a product of the process which can prevent the generation of depressions in a pockmark form on a surface of the product foamed molding to increase the yield of the product by adjusting the jelly strength of a binder in the production of the foamed molding from a fibrous material, and which can be used as a cushioning material excellent in elastic performance, and the like, by decreasing the specific gravity of the product, and a production method which can produce the foamed molding economically, continuously and in large amounts.

### Disclosure of the Invention

The present invention relates to a method for producing a foamed molding according to claim 1.

### Brief Description of the Drawings

Fig. 1 is a whole diagram showing a production apparatus suitable to carry out the method for producing a foamed molding of one embodiment of the present invention;
Fig. 2 is a perspective view showing a use state of a nozzle unit of a molding machine incorporated into a production apparatus suitable to carry out the method for producing a foamed molding of the invention;
Fig. 3 is an enlarged view of a substantial part showing a foamed molding during molding in a molding machine;
Figs. 4 (a) to 4 (d) are front views of nozzles of various embodiments;
Fig. 5 (a) is an enlarged bottom view showing a nozzle unit whose extrusion opening has a continuous triangular shape, and Fig. 5(b) is a perspective view showing a sheet-like foamed molding molded through the nozzle of Fig. 5(a);
Fig. 6 (a) is an enlarged bottom view showing a nozzle unit whose extrusion opening has a continuous wavy shape, and Fig. 6(b) is a perspective view showing a sheet-like foamed molding molded through the nozzle of Fig. 6(a);
Fig. 7 is a perspective view showing a sheet-like foamed molding in which a plurality of sheets are laminated;
Fig. 8 is a graph showing the relationship between the foaming specific gravity of a kneaded product and the absolute dry specific gravity;
Fig. 9 is a graph showing the influence of the degree of foaming and jelly strength on the appearance of a product foamed molding; and
Fig. 10 is a graph showing the influence of the degree of foaming and jelly strength on the absolute dry specific gravity of a product foamed molding.

### Best Mode for Carrying Out the Invention

The above-mentioned fibrous materials used in the present invention include but are not limited to woolen fabric (waste wool), pulp sludge and glass fiber, as well as used paper such as newspaper, magazines or corrugated cardboard. As the fibrous material to be kneaded with the aqueous solution, one finely opened with a dry opener such as a cutter or a mill is preferably used. However, one previously made muddy with water or one wet opened in water may be used. For example, when used paper is opened with a dry opener, one opened so as to pass through a screen of the opener having an opening size of 1 to 15 mm, more preferably 1 to 5 mm, can be employed.

As the water used in the above-mentioned aqueous solution, there can be appropriately used industrial water, tap water, purified water or the like. Furthermore, at least a binder is contained in the aqueous solution to be kneaded with the above-mentioned fibrous material, and the binder is used in order to form a good foamed product. The binders include gelatin, glue and alginic acid which are natural products, polyvinyl alcohol which is a synthetic product, and the like. These may be used either alone or as a combination of two or more of them.

The jelly strength of the binder mainly composed of the above-mentioned gelatin or glue is 130 Bloom or more, and preferably from 130 to 240 Bloom. Lower than 130 Bloom results in the tendency to generate depressions in a pockmark form on the surface of the foamed molding. 130 Bloom or more increases bonding force with opened used paper, enhances dispersibility and retention of air to inhibit the occurrence of breakage of foams in molding, resulting in no fear of generating depressions in a pockmark form on the surface of the foamed molding to detract it from the appearance as a product, and moreover results in the difficulty of generating voids in the inside of the foamed molding, which can also increase the strength of the foamed molding.

The measurement of the jelly strength of gelatin or glue is carried out in accordance with the measuring method of JIS K6503, "5. 4 Jelly Strength". However, in the foamed molding of the present invention, the concentration of a test solution
for measuring the jelly strength is 6.67% by weight also for glue.

Further, the jelly strength of the binder and the viscosity are in an approximately proportional relation, so that it is also possible to specify the binder by the viscosity. In this case, the binder is required to have a viscosity of 2.5 mPas or more when measured at a test solution concentration of 6.67% by weight.

It is preferred that the fat arid oil content of the binder mainly composed of the above-mentioned gelatin or glue is smaller, so that it is 0.3% by weight or less. More than 0.3% by weight results in the difficulty of foaming.

When the content is 0.3% by weight or less, air bubbles are easily incorporated into the kneaded product in preliminary kneading in which the aqueous solution containing the fibrous material such as opened used paper and the binder such as gelatin is slowly stirred, so that the specific gravity of the foamed molding of the product can be controlled to lower the specific gravity of the foamed molding, which causes low cost.

The measurement of the fat and oil content of gelatin or glue is carried out in accordance with the measuring method of JIS K6503, "5. 6 Fat and Oil Content".

Further, using a Pasolina test tube mixer NS-80 manufactured by Iuchi Co., the aqueous solution is stirred at 2,800 rpm for one minute, and the foaming height at the time when one minute has elapsed after the standstill of stirring is adjusted to 2 mm or more, thereby being able to control the specific gravity of the foamed molding of the product to lower the specific gravity of the foamed molding, which causes low cost.

The measurement of the foaming height of gelatin or glue is made in accordance with the following method.

Five milliliters of a test solution having a temperature of 60 °C and a concentration of 10% by weight is collected in a test tube (internal diameter: 13 mmφ ± 1 mm), and stirred with a test tube mixer for 1 minute, allowing it to eccentrically circulate at 2, 800 rpm at a stroke of 10 mm. After the solution has been thus stirred and foamed, an upper face and a lower face of a foamed layer are marked, and the test tube is immersed in a beaker maintained in hot water of 60°C. One minute after the standstill, the height of the foamed layer is measured. The height of the foamed layer at that time is taken as the foaming height (hereinafter referred to as the degree of foaming), and the degree of foaming is 2 mm or more.

Further, the binder is preferably mixed in an amount of 10 to 60% by weight based on the fibrous material such as paper. Less than 10% by weight results in the tendency to generate depressions in a pockmark form on the surface of the foamed molding. On the other hand, exceeding 60% by weight results in a significant increase in viscosity of the foamed product, and therefore, the supply to the foaming device becomes difficult.

Further, as the above-mentioned kneader, there can be employed, for example, a kneader equipped with a paddle stirrer or a screw stirrer, a screw kneader or the like.

Specifically, for example, a kneader having a vessel, a stirrer attached to the vessel, a pump connected to the vessel and a circulating means from this pump to the vessel can be used. That is to say, while the fibrous material and the aqueous solution are mixed by stirring with the stirrer, a part of the kneaded product is taken out with the pump, and circulated to the vessel, thereby being able to obtain the uniform kneaded product.

Further, chemicals appropriately mixed with the kneaded product include a crosslinking accelerator, a softening agent and the like.

The crosslinking accelerator is used in order to stabilize a foamed shape as needed. The crosslinking accelerators include a crosslinking accelerating enzyme represented by transglutaminase, formalin, acetaldehyde and glutaraldehyde which are aldehyde compounds, alum (aluminum potassium sulfate) which is a complex salt, and the like. These may be used either alone or as a combination of two or more of them.

Further, the softening agent is used in order to give elasticity to the molding. The softening agents include glycerol, ethylene glycol, diethylene glycol, polyethylene glycol, triethanolamine, polyvinyl alcohol and the like, or one in which sucrose is added to any one of these. These may be used either alone or as a combination of two or more of them.

Furthermore, chemicals other than the above which are appropriately added to the kneaded product include a release agent, a surfactant, an antibacterial agent, an antifungal agent, a coloring agent, a bleaching agent, an antioxidant, a weatherproofing (lightproofing) agent, a frame retardant, a filling agent and the like.

Of these chemicals, Hitenol manufactured by Daiichi Kogyo Seiyaku Co., Ltd., a polyoxyethylene alkyl ether, is preferred as the surfactant.

Addition of the surfactant, particularly Hitenol, obtains the effect of enhancing the degree of foaming of the kneaded product or the foamed molding. In this case, the amount of the surfactant added is determined based on the binder or the fibrous material. It is usually from 0.1 to 2.5% by weight, and preferably from 0.3 to 1.5% by weight, based on the fibrous material in the kneaded product.

The surfactant has the function of dispersing fats and oil. Accordingly, even when fats and oils are contained in an amount of 0.3% by weight or more, or the degree of foaming is 2 mm or less, in the binder having a jelly strength of 130 Bloom or more, it is possible to increase the degree of foaming to 2 mm or more by adjustment for increasing the amount of the surfactant added. Even when the binder having characteristics in which the degree of foaming is near to the threshold value or further the binder containing fats and oils in large amounts is used, the product foamed molding can be relatively decreased in specific gravity, and allowed to have cushioning properties and elasticity.

Further, it becomes possible to control the specific gravity, cushioning properties and elasticity of the kneaded product, foamed product and product to.a certain range by determining the amount of the surfactant added so as to give a desired height of 2 mm or more for the degree of foaming, and the qualities are stabilized without being affected by the properties of the fats and oils and the like of the binder.

As for the fibrous material used in kneading, there are many examples containing fats and oils. For example, oil-based ink adheres to paper obtained by pulverizing used paper such as magazines or printed paper.

Further, cellulose of the raw material of paper is capillary and porous, so that it is rich in absorptivity to cause ink blotting, and when adhesion among fibers is weak, fluffing and paper peeling occur. Accordingly, for the purpose of preventing these, sizing is applied. As a sizing agent, free rosin (pine resin) is used, and fixed on fibers. Fats and oils are extracted by a binder solution kneaded therewith, so that the foaming properties of the binder are inhibited or the defoaming of foam is accelerated in some cases. Accordingly, also when used paper whose background such as inclusion of fats and oils is unknown is used in kneading, a binder test solution is prepared using an extracted aqueous solution of the pulverized used paper, and the addition mixing ratio of the surfactant is determined so as to give a degree of foaming of 2 mm or more, thereby being able to stably control the qualities such as the specific gravity and cushioning properties of the product foamed molding. Further, it becomes possible to stabilize the qualities by determining the amount of the surfactant added so as to give a desired height of 2 mm or more for the degree of foaming, without being affected by the variation of the properties of the fats and oils of the binder used in kneading or the variation of the fat and oil content and the like of the fibrous material by use. As for the extracted test solution of used paper utilized for measurement of the degree of foaming of the binder test solution, it is desirable that the used paper is extracted by the quantity of water with the same ratio as actually applied to the kneading step, and it is also desirable that the extraction is conducted at a temperature matched to the temperature of the kneading step.

The surfactant improving the foaming properties and foam keeping properties of the binder aqueous solution has the above-mentioned effects by increasing the amount thereof added, but has a limitation from the point of binder affinity such as easy generation of depressions in a pockmark form on the foamed molding. It is desirable that the amount of the surfactant added is from 0.2 to 10% by weight based on the binder.

The surfactants include liquid, paste-like and granular ones, and a method can also be employed in which the granular surfactant is previously mixed with the granular binder at a specified ratio, and liquidized in dissolution of the binder in the aqueous solution at the same time.

Further, as the above-mentioned antibacterial agent, potassium sorbate is particularly preferred. Addition of the antibacterial agent such as potassium sorbate can give antibacterial activity to the resulting foamed molding. The amount of the antibacterial agent such as potassium sorbate added is usually from 0.7 to 3% by weight, and preferably from 1 to 2% by weight, based on the binder. When it is less than 0.7% by weight, the resulting foamed molding gets moldy in a wet state in the worst environment. On the other hand, when it exceeds 3% by weight, not only the effect reaches the ceiling, but also it is not economical.

The most suitable product can be produced by selecting the above-mentioned various chemicals according to its use and appropriately establishing the amount thereof added to add them. The amount of the crosslinking accelerator added is usually from 1 to 20% by weight, and preferably from 4 to 10% by weight, by the ratio based on the binder. When it is less than 1% by weight, defoaming after foaming is quickened to increase the shrinkage percentage of the product foamed molding. On the other hand, when it is more than 20% by weight, the crosslinking reaction is accelerated too much, resulting in a significant increase in viscosity or coagulation to bring about the difficulty of molding.

The aqueous solution of gelatin or glue used as a main component of the binder is increased in viscosity by addition of the crosslinking reaction accelerator, witch intermolecular bonding by the crosslinking reaction. Although this strengthens the function of binding the pulverized fibrous material by adhesion, the binder aqueous solution in which the fibrous material is kneaded with other additives added as needed is characterized by that the viscosity thereof largely increases in the vicinity of PH 5 from the characteristics of the binder. The PH of the binder aqueous solution varies depending on the fibrous material, binder or other additives to be kneaded. However, the PH is controlled to a certain range in the production, thereby stabilizing the qualities and decreasing raw material cost. The PH of the kneaded product of the binder aqueous solution and the PH of the product foamed molding are not generally changed so much. However, when the PH of the binder aqueous solution is adjusted to 4.5 to 6.5, the viscosity of the kneaded slurry reaches a high region, resulting in good foaming properties. Further, it has the effect that the bonding force of the binder increases to decrease the shrinkage caused by drying or standing of the molding, which leads to a decrease in raw material cost. When the PH is 4.5 or less, not only the viscosity decreases to lower the bonding force of the binder, but also iron rust-attacking properties in using the foamed molding as the product becomes strong. Further, when the PH is 6.5 or more, the viscosity decreases to lower the bonding force of the binder, and therefore the shrinkage caused by drying or standing of the molding increases to cause an increase in raw material cost.

In general, the PH of the fibrous material largely varies with the difference in the treatment background, and variations for each lot are wide. Although it is possible to obtain the fibrous material in which the PH is regulated to a definite range, the cost is high. Accordingly, in order to regulate the PH of the kneaded product to a definite range or to control the PH to 4.5 to 6.5, it is possible to further add a PH regulator or a PH buffer in addition to the other additives. As the PH regulators, there are hydrochloric acid, sulfuric acid, acetic acid, citric acid and the like in the acidic direction, and sodium hydroxide, potassium hydroxide, calcium hydroxide and the like in the alkaline direction. Further, as the PH buffers, there are sodium acetate, ammonium acetate, sodium dihydrogen phosphate, potassium hydrogen phthalate and the like.

As the foaming agents, there are sodium bicarbonate, sodium azide and the like.

Further, the amount of softening agent added is from 5 to 100% by weight, and preferably from 15 to 80% by weight, by the ratio based on the fibrous material. When it is less than 5% by weight, the product foamed molding is hard to decrease cushioning properties or buffering properties, and the product warps or becomes brittle in drying. On the other hand, when it is more than 100% by weight, the flexibility and cushioning properties of the product foamed molding increases, but the specific gravity of the product increases to cause high cost, and the product having a wet feeling is obtained.

As a kneading method of the above-mentioned fibrous material with the aqueous solution, the whole amount of the fibrous material may be mixed with the aqueous solution at once to conduct kneading, or after a part of the fibrous material has been mixed with the aqueous solution, the remainder of the fibrous material may be mixed to conduct kneading. However, it is preferred that a kneader is filled with an aqueous solution containing at least the binder, and the fibrous material is gradually added to this aqueous solution with stirring to conduct kneading, because kneading can be conducted uniformly and easily in a small water amount and in a small amount of the binder used. Further, when the fibrous material is mixed with water containing no binder, the water content of the kneaded product becomes high, the drying time is prolonged, and the amount of the binder used also increases. For example, when used paper is kneaded with only water, the water content of the kneaded product is 90% by weight or more. In the aqueous solution containing the binder, the water content of the kneaded product is about 70% by weight.

The time it takes to supply the resulting kneaded product from the kneader to the foaming device is preferably within one hour in order to keep a foamed state of the kneaded product. Exceeding one hour results in the tendency to defoam.

Further, the solid matter concentration of the kneaded product is usually from 10 to 40% by weight, and preferably from about 15 to about 30% by weight. When the solid matter concentration of the kneaded product is lower than 10% by weight, the water content increases to take long to dry, and energy cost also increases. When it is higher than 40% by weight, the solid matter concentration increases too much, resulting in the loss of fluidity, which makes it difficult to transfer with a pump or the like.

Cellulose of paper is capillary one, and has the function of absorbing and holding water. In an actually kneaded state, the binder concentration in the binder aqueous solution is higher than a value simply calculated from the compounding ratio of kneading. The water absorption weight reaches 2 to 3 times the weight of paper itself in some cases, although it depends on the kind of paper. Further, it varies depending on the. background of paper, and the actual concentration of the binder aqueous solution changes for each lot. This is one of the causes to bring about lot-to-lot variations of the specific gravity or cushioning properties of the foamed molding of the product. Accordingly, the water absorption of the fibrous material used in kneading is previously measured, and the inherent moisture content of water absorption based on the weight of the fibrous material is calculated. On the other hand, the moisture content used in kneading is determined so as to give the moisture content calculated from the desired aqueous solution concentration mixed with the binder and the other additives, thereby being able to control the actual concentration of the binder aqueous solution for each lot to a definite range. This makes it possible to regulate lot-to-lot variations of the specific gravity or cushioning properties of the foamed molding.

The same applies also when the wet fibrous material is kneaded, and it becomes possible to control the actual concentration of the binder aqueous solution to a definite range in the same manner as described above by previously measuring the percentage of water absorption of the fibrous material wetted, water-absorbed and stirred.

As the above-mentioned foaming device, there is appropriately employed an air-mixing foaming device in which foaming is carried out while mixing the air.

The pressure in the foaming device and the air-mixing foaming device is usually from 0.1 to 0.5 MPa, and preferably from 0.2 to 0.4 MPa. When the pressure is lower than 0.1 MPa, the air is not sufficiently mixed, so that foaming becomes insufficient, resulting in an increase in the specific gravity of the molding and in the tendency to generate depressions in a pockmark form on the surface thereof. On the other hand, higher than 0.5 MPa leads to a significant change in pressure to bring about rapid expansion, so that depressions in a pockmark form are liable to be generated on the surface of the foamed molding of the product in the same manner as described above to increase the percent defective of the appearance. Further, the mixing ratio of air in the air-mixing foaming device is usually from 0.1 to 2 NL/minute, and preferably from 0.6 to 1 NL/minutes, based on kg/minute of the kneaded product.

When the mixing ratio of air is less than 0.1 NL/minute, the air amount is too small, resulting in insufficient foaming to cause an increase in the specific gravity of the molding. On the other hand, when it is more than 2 NL/minute, it becomes impossible to hold fine air bubbles. Accordingly, depressions in a pockmark form are liable to be generated on the surface of the foamed molding of the product in the same manner as described above to increase the percent defective of the appearance.

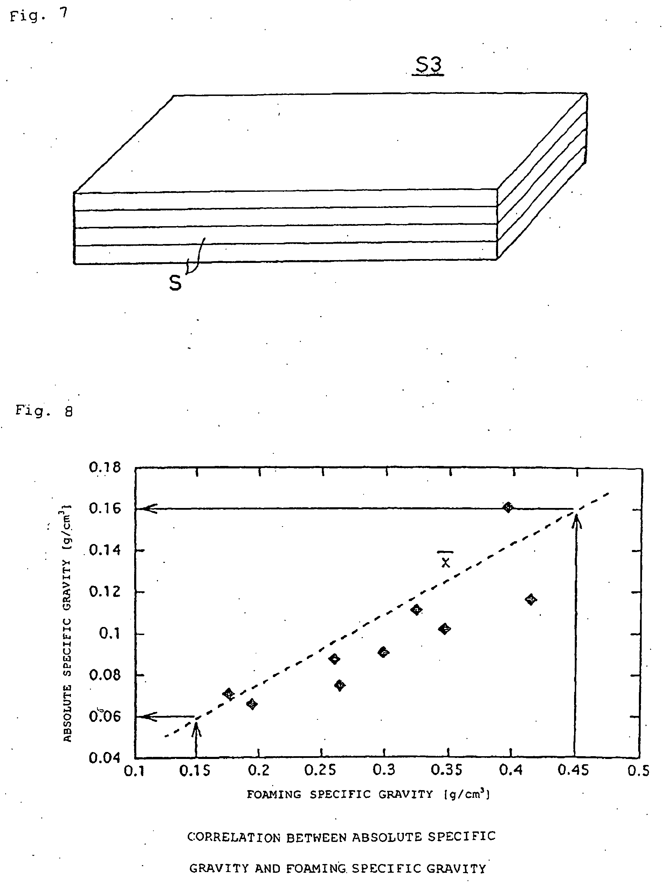

As for a specific foaming method of the kneaded product, a specified pressure (for example, 0.2 MPa or more) is applied to the kneaded product, to which (for example, air) is forcedly supplied with an gas supply device at a temperature at which the binder such as gelatin does not solidify and not deteriorate (for example, 50 to 70°C) while continuously stirring and mixing by means of a mixer of a specified peripheral speed (for example, 4 m/s or more), thereby allowing the kneaded product to foam. The foaming specific gravity of a mixture iri the foaming device is from 0.15 to 0.45 g/cm³ (refer to Fig. 8). When the foaming specific gravity is lower than 0.15 g/cm³, the molding after drying becomes too weak in strength. On the other hand, when it is higher than 0.45 g/cm³, the molding increases in weight, and the cushioning effect decreases when it is used as a cushioning material. Although it is preferred that the specific gravity of the molding after drying is lower, the establishment to the above-mentioned foaming specific gravity makes it possible to obtain the good product having an absolute specific gravity (a specific gravity at constant temperature under conditions of a temperature of 80°C and a relative humidity of 7 to 8%) of about 0.06 to about 0.16 g/cm³ and relatively high in the strength of the foamed molding.

In order to continuously perform the kneading step and the foaming step, two kneaders may be installed so that the kneaded product is alternately supplied from each kneader to the foaming device. Further, an intermediate slurry tank for temporarily storing the kneaded product may also be installed. It is preferred that this intermediate slurry tank is equipped with a stirrer for keeping the foamed state of the kneaded product. Furthermore, a plurality of foaming devices may be installed connecting them in series so that the above-mentioned various raw materials are continuously supplied to the foaming device of the first stage, continuously supplied to the foaming devices of the subsequent stages, and subjected to a foaming operation in the foaming device of the final stage.

As the above-mentioned molding machines, it is also possible to employ, for example, various general-purpose extruders extruding the resulting kneaded product through dies with screws, and solidifying it by cooling or heating, injection molding machines injecting the resulting kneaded product in molds through nozzles with cylinders, and solidifying it by cooling or heating in the molds, and the like.

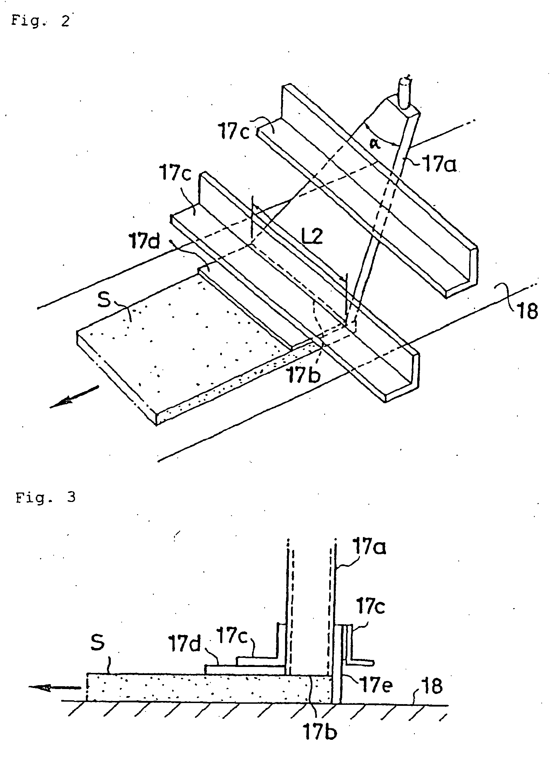

Further, the above-mentioned molding machine requires only that it has a nozzle unit for extruding the foamed product toward an upper face of a plate-like substrate for molding through an extrusion opening, that the plate-like substrate and the nozzle unit move relatively in a horizontal direction, that the width of the above-mentioned extrusion opening of the nozzle unit is at least approximately identical to the width of the plate-like foamed molding, and that the foamed product is extruded from the extrusion opening onto the plate-like substrate and the width of the extrusion opening is at least approximately identical to the width of the plate-like foamed molding. The nozzle is preferably a nozzle widened toward the extrusion opening having a specified thickness, and a wide foamed molding can be produced at one time. The shapes of the divergent nozzles include a pentangular shape, a triangular shape, a home base shape and the like in a front shape. Further, an extremely wide foamed molding can be produced at one time by arranging the plurality of nozzles widened toward the extrusion opening having a specified thickness in a form in which they are connected in the width direction, thereby improving productivity. Further, the elevation angle α of the divergent nozzle (the angle of a top portion on the supply port side of the foamed product (refer to Fig. 2) is from 30 to 85 degrees, and preferably from 40 to 60 degrees. When the elevation angle α is less than 30 degrees, the height of the nozzle unit becomes too high, resulting in the possibility of the foamed product coagulating on the way. On the other hand, more than 85 degrees results in the possibility of shapes of both sides becoming irregular.

Further, the supply port side for the foamed product of the nozzle unit for extruding the foamed product of the molding machine is directly connected to the foaming device, so that a metering pump and the like in the connection of the foaming device to the molding machine, which is used in a conventional apparatus for producing synthetic resin moldings or molded food products, can be made unnecessary.

It is also preferred that an flattening plate for smoothly flattening the surface of the extruded foamed molding and adjusting the thickness in cooperation with the above-mentioned nozzle unit is attached to the above-mentioned nozzle unit. The thickness of the foamed molding can be arbitrarily controlled by adjusting the height of the extrusion opening of the nozzle unit and the height of the flattening plate in cooperation. Further, the cross sectional form of the extrusion opening in plan view or a lower face of the above-mentioned flattening plate has a continuous triangular shape, whereby drying becomes easy because the surface area is increased. Furthermore, two sheets of the resulting foamed moldings are laminated, bringing the continuous triangular shapes of the surfaces into mesh, thereby being able to produce easily a laminate high in strength, because it is difficult to slip and shock is dispersed. The cross sectional form of the extrusion opening in plan view or the lower face of the above-mentioned flattening plate has a continuous triangular shape, whereby drying becomes easy because the surface area is increased. Further, the resulting foamed molding is high in strength, because shock is dispersed.

Further, it is preferred that at least an upper face of the plate-like substrate for molding is processed with a synthetic resin. The synthetic resins include a fluororesin such as polytetrafluoroethylene, polypropylene, polyethylene, silicone rubber and the like. These synthetic resin processings include, for example, a method of coating at least the upper face of the plate-like substrate, a method of laminating a glass sheet, a net-like sheet or the like impregnated with the synthetic resin, and the like. Further, as the plate-like substrate, an iron material frame is satisfactory, and a substrate made of aluminum is preferred from a decrease in weight and the like.

The use of the plate-like substrate processed with the synthetic resin as described above can reduce the peel strength (the force necessary for peeling off) of the foamed molding.

For example, the peel strength in the case of only the plate-like substrate of aluminum is about 4 kgf or more per 300 mm width. However, it is 2 kgf for the plate-like substrate laminated with the glass sheet impregnated with the fluororesin, and 1.7 kgf for the plate-like substrate laminated with a polypropylene net, which shows that the release property is extremely improved.

By the molding machine having the nozzle unit for extruding the foamed product toward the upper face of the plate-like substrate for molding through the extrusion opening, the nozzle unit having a size approximately identical to the width of the plate-like foamed molding, and producing the plate-like foamed molding by allowing the plate-like substrate and the above-mentioned nozzle unit to move relatively in a horizontal direction, the plate-like foamed molding is dried once, and then, the operation of extruding the foamed product to the upper face of the above-mentioned plate-like foamed molding is further repeated to produce the laminated foamed molding having a specified thickness, whereby the laminated foamed molding having a specified thickness can be easily produced, the drying time of the laminated foamed molding produced can be shortened, and the laminate high in adhesive strength can be produced without the use of an adhesive.

It is also preferred that fabric is laid on the above-mentioned plate-like substrate and the foamed product is extruded thereon. When the foamed molding is integrally laminated on the fabric like this, the strength of the plate-like foamed product is improved, as well as the plate-like foamed product becomes easily releasable from the plate-like substrate, after the plate-like foamed product is dried.

Here, for the shape of the fabric, it may be either a flat plate shape or a rugged shape such as a wavy shape. When the fabric having the rugged shape is used, the foamed product is extruded thereon to coat it to a thickness exceeding the height of concave portions of the rugged shape. Further, the fabric may be any material such as woven fabric or knitted fabric, as well as nonwoven fabric such as paper or board art, as long as it belongs to the concept of fabric. However, the paper or the board art is preferred in that it can be supplied at a low price. The paper may be any paper such as kraft paper or trim paper. Further, the board art may be any board art such as single-sided corrugated cardboard. When the paper is used, the use thereof in a dry state tends to cause the development of wrinkles, distortions, warps and the like in the resulting foamed molding due to the moisture of the foamed product. It is therefore desirable to previously wet it with water to a wet state. The water content of the foamed product becomes approximately identical to that of the paper by previously wetting the paper with water like this, and the wrinkles, the distortions, the warps and the like of the resulting foamed molding can be prevented by drying from the same water content.

For previously wetting the paper to a wet state herein, the paper is laid on a plate-like material, and the paper is wetted by use of a water supply means such as a shower on the paper.

The fabric such as this paper not only is laid on the plate-like material, but also can be laminated on an upper portion of the foamed product separately extruded to form a sandwich structure in which fabrics are laminated on both sides of the plate-like foamed product.

Like this, the fabric such as paper is laid on the plate-like substrate, and the foamed product is extruded thereon to form the foamed molding in which the fabric and the foamed product are integrally adhered and solidified, thereby first being able to significantly decrease the peel strength between the plate-like substrate and the resulting foamed molding, which makes it possible to peel the foamed molding more simply than conventional methods. By the way, when a conventional foamed product is directly extruded on a plate-like material, the peel strength of a foamed product is about 2 kgf. However, when the fabric such as paper is laminated, it is about 0.5 kgf, which shows that the release property is extremely improved. Further, a binder is contained in the foamed product, so that the foamed product is adhered with the fabric such as paper of itself and solidified in the drying step. Accordingly, it is unnecessary to use an adhesive such as paste.

Further, the fabric such as paper is laminated in the resulting foamed molding, so that the strength against bending and stretching of the material is improved, and the processing suitability and quality of the product are improved. For example, compounding is conducted by laminating the fabric such as paper, so that the material strength is more improved than that of a conventional single-body material, and peeling becomes easy also when peeled from the plate-like material. Further, in the case of compounding with corrugated cardboard, the original cushioning effect (stability) of the foamed molding is added, and a corrugated cardboard material strong against repeated falling is obtained. Further, when paper is laminated on a surface of the resulting foamed molding, no unevenness develops on the surface to give smoothness, and the accuracy of thickness can be improved.

Further, when the foamed product itself is thinned to use as a wrapping material or the like, this foamed product itself is weak in strength, and breaks easily. However, when board art is used in combination, this also achieves an effect as a reinforcing material to increase the strength, which substantially improves handling in using the resulting foamed molding as a product. Furthermore, when the board art is used, the residual water of the foamed product is absorbed because it is rich in water absorption, and the drying time can be substantially shortened, compared to one using no board art.

Further, when board art having a rugged shape is used, the contact surface between the foamed product and the rugged shape such as a wavy shape increases compared to a flat plate shape, and the drying time can be dramatically shortened. Furthermore, the amount of the foamed product used in a portion corresponding to the wavy cross sectional area is saved, so that it is low in price and the drying time is shortened by saved one of the volume used. Further, the cushioning characteristics of the wavy shape itself can be enjoyed together, so that a foamed molding of a compromise type having cushioning characteristics peculiar to the corrugated cardboard, which can not be provided by the foamed molding composed of the single body foamed product, is obtained.

Further, methods for molding the plate-like molding are not limited to the above-mentioned methods. For example, the foamed product may first be extruded from the above-mentioned molding machine onto an endless belt having the release property to form a plate-like molding, then, cold air is blown on a surface of this plate-like molding to dry or solidify, and further, it may be placed on the above-mentioned plate-like substrate in an inverted state.

As the endless belts as used herein, there are used materials having the release property such as silicone rubber and a polytetrafluoroethylene-coated rubber belt. The surface of the plate-like molding molded on the endless belt is cooled and/or dried with cold air, thereby drying and/or solidifying the plate-like molding to improve the release property. As for the conditions of cold air treatment, the temperature is from 10 to 20°C, and the air flow is from about 4 to about 10 Nm³/kg based on the weight of the molding before drying. Then, the plate-like molding placed on the endless belt is placed on the plate-like substrate, in a state in which the belt is inverted, and may hereafter be transferred to the drying step in accordance with the above-mentioned production method.

When molding is conducted by this method, it can be placed on the plate-like substrate in a state in which the surface is a little dried or solidified, and therefore, the adhesion with the plate-like substrate in the drying step can be reduced. Accordingly, the release property of the foamed molding after drying from the plate-like substrate (tray) is improved. As a result, the labor of product separation work is decreased, and the rate of.occurrence of defective products can be reduced.

In the molding machine used in the above production method, foreign matter is liable to be accumulated in dead spaces of the molding machine during operation, and the product is sometimes deteriorated in quality by contamination of the foamed product with the foreign matter. According to the conventional method for removing foreign matter in the molding machine, the troublesome work of stopping the production apparatus, and disassembling and washing the molding machine is required. Moreover, it is necessary to install a washing mechanism for washing with water and a drainage fac ility. Extrusion of the unfoamed kneaded product into the molding machine makes it possible to sweep away the foreign matter staying in the molding machine. Even when the foamed product is extruded into the molding machine, the foreign matter staying in the dead spaces in the molding machine can not be swept away, because the foamed product itself is low in specific weight and has elasticity. It becomes possible to sweep away the foreign matter in the molding machine without stopping the apparatus, for example, by stopping the gas supply device of the above-mentioned foaming device, and extruding the unfoamed kneaded product into the molding machine.

According to this foreign matter removing method, the unfoamed kneaded product can be recovered and utilized, which avoids waste. Accordingly, compared to the conventional foreign matter removing method by washing, it has the advantages that equipment cost is decreased, that the raw material and utility cost does not increase, and that the removal of the foreign matter is possible without stopping the apparatus.

As the above-mentioned dryer, there can be employed, for example, a shelving natural dryer in which a molding is placed on a shelf and naturally dried, a heat dryer in which a molding is dried by heating with heat of a heater, a hot air dryer drying it by heating with hot air, a reduced-pressure dryer drying it, reducing the pressure in a drying chamber to a negative pressure state, a freeze dryer of a freeze dry type, and the like. In the conventional production methods, the abode-mentioned heat drying has been conducted at a drying temperature of 40°C or less, because gelatin mixed as the binder melts out. However, in the invention, the production method is different therefrom. Air is mixed in large amounts, which allows uniform foaming, and gelatin or the like mixed as the binder does not melt out. Accordingly, the drying temperature is from 60 to 150°C, and preferably from 70 to 100°C. When the drying temperature is lower than 60°C, the time it takes to dry is too long, and the shrinkage percentage of the foamed molding increases. On the other hand, longer than 150°C results in the occurrence of composition changes in various components contained in the foamed molding to lower flexibility. Further, as the dryer, preferably is the hot air dryer. When the hot air dryer is used, it is preferred that the drying step is divided into the former drying (fixed rate) step in which drying is conducted at a hot air drying temperature of 100°C ± 20°C for 50 to 80% of the total drying time and the latter drying (lapse rate) step in which drying is conducted at 80°C ± 20°C for 20 to 50% of the total drying time, and that at least, the hot air drying temperature of the latter drying step is established to be lower than that of the former drying step. When the former drying is conducted at a low temperature outside the above-mentioned range, it takes a long time to dry, and the shrinkage percentage of the foamed molding increases. When it is conducted at a high temperature, composition changes in various components contained in the foamed molding occur to lower flexibility. Further, when the latter drying step is conducted at a low temperature outside the above-mentioned range, it takes a long time to dry. When it is conducted at a high temperature, composition changes in various components contained in the foamed molding occur to lower flexibility. Furthermore, when the hot air drying temperature of the latter drying step is established to a temperature higher than that of the former drying step, only a state in which the temperature of the product is slightly elevated is achieved, which causes poor drying efficiency.

Further, in the drying step, microwave drying can be used either alone or in combination with the hot air dryer, in addition to the above-mentioned dryers.

The above-mentioned hot air drying is inexpensive in equipment cost, but a surface portion of the foamed molding dried is liable to solidify. On the other hand, drying at a center portion is retarded, and the uniformity of the resulting product is not necessarily good. In contrast, according to the microwave drying, the surface portion and center portion of the foamed molding are uniformly dried, so that the resulting product is excellent in uniformity.

In the case of the microwave drying, the microwave capacity is from 0.7 to 2.5 kW/kg, and preferably from 0.5 to 2 kW/kg based on the weight of the molding before drying. Less than 0.7 kW/kg results in prolonged drying time and increased shrinkage of the foamed molding after drying, whereas exceeding 2.5 kW/kg results in shortened drying time, but results in inflation of the foamed molding like bread and causes the center portion to burn in some cases. When the microwave capacity is within the above-mentioned range, inflation, crazing and burning of the core portion do not develop in the resulting foamed molding, and the shrinkage is small, resulting in optimum microwave drying conditions. Further, compared to the heat drying, the binder and fibrous material after drying are dried as they are uniformly distributed. In the case of the microwave drying, an initial stage of the drying may be carried out at a high capacity, and a later stage of the drying may be carried out at a low capacity after a period of time.

As described above, the microwave drying and the heat drying can also be used in combination with each other. That is to say, the heat hot air drying is less expensive in equipment cost than the microwave drying. Accordingly, for example, after the microwave drying is conducted in the beginning of the drying to dry the center portion to some degree, the hot air drying may be conducted, or the microwave drying and the hot air drying may be conducted at the same time.

The production apparatus which is not part of the invention and production method of the foamed molding of the invention will be specifically described below based on the drawings.

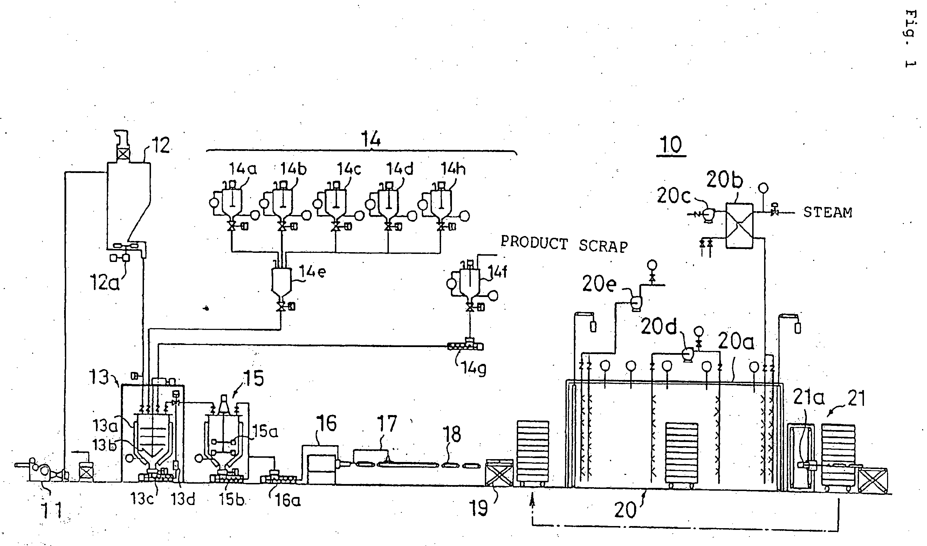

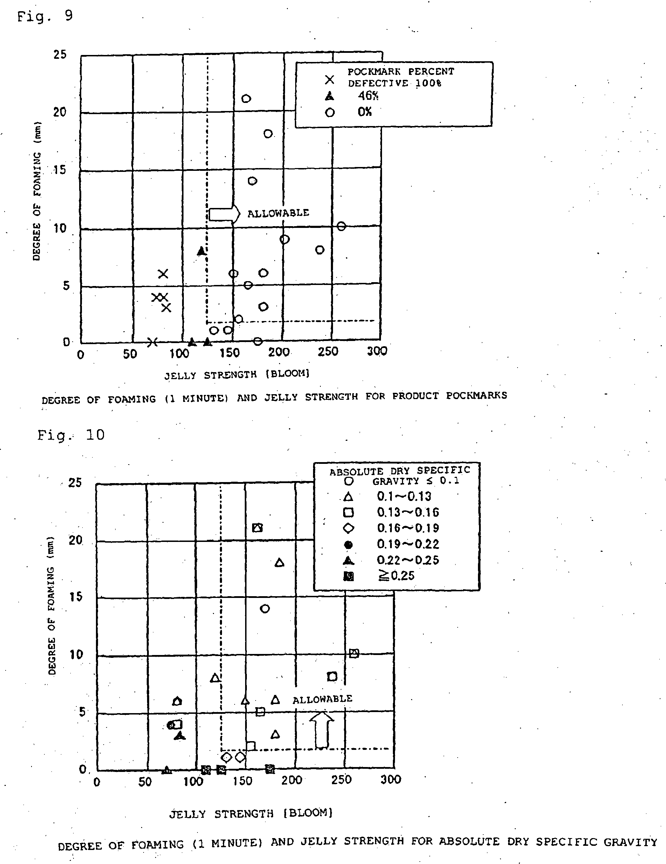

In Fig. 1, 10 is a production apparatus for producing a foamed molding which is a foamed molding from used paper of a fibrous material. This production apparatus 10 is equipped with a used paper opener 11 for opening the fibrous material, an opened used paper-storing hopper 12 for temporarily storing the opened used paper, a kneader 13 for kneading the opened used paper and various addition chemicals, a chemical supply equipment 14 for storing the various addition chemicals and supplying them to the kneader 13, an intermediate tank 15 for temporarily storing the resulting kneaded product, a foaming device 16 for foaming the kneaded product, a molding machine 17 for molding the resulting foamed product to sheet-like foamed moldings, a molding conveyer 18 for taking out the foamed moldings, on which a tray, a synthetic resin-finished plate-like substrate, is placed, a rack stacking device 19 for rack stacking the foamed moldings taken out, a dryer 20 for drying the foamed moldings to product foamed moldings, and a foamed molding pusher 21 for pushing out rack-stacked product foamed moldings, sheet by sheet. A plurality of kneaders 13 may be disposed without installation of the intermediate tank.

The used paper opener 11 is a device in which the used paper such as newspaper, magazines or corrugated cardboard is opened with a cutter or the like and passed through a screen having an opening size of 1 to 15 mm to obtain the opened used paper.

A lower part of the opened used paper-storing hopper 12 is equipped with a volumetric feeder 12a for supplying the opened used paper to the kneader 13.

The kneader 13 is a device which kneads the opened used paper from the opened used paper-storing hopper 12, water and the various chemicals from the chemical supply equipment 14 to produce the kneaded product. Specifically, a vessel 13a, a stirrer 13b attached to the vessel 13a, a pump 13c for transferring the kneaded product, which is connected to the vessel 13a at a lower part thereof, and a circulating line from this pump 13c to the vessel 13a are disposed. While mixing the opened used paper with an aqueous solution containing the chemicals by stirring with the stirrer 13b, a part of the kneaded product is taken out with the pump 13c, and circulated to the vessel 13a, thereby obtaining the uniform kneaded product. As the pump 13c, there has been employed a positive displacement pump generally used for high-viscosity mixtures.

The chemical supply equipment 14 has a first hopper 14a for storing the binder, a second hopper 14b for storing the softening agent, a third hopper 14c for storing the release agent, a fourth hopper 14d for storing the crosslinking reaction accelerator and a fifth hopper 14h for storing a preservative.

A measuring tank 14e is disposed between these hoppers 14a to 14h and the kneader 13, and the injection rates of the various types of chemicals supplied to the kneader 13 are measured with the measuring tank 14e.

Scraps and the like of the resulting foamed moldings and dried products may be once stored in a repulping tank 14f, and pumped into the kneader 13 as a part of the opened used paper with a pump 14g. Alternatively, scraps and the like of the resulting foamed moldings and dried products may be opened with the used paper opener 11, once stored in the hopper 12, and pumped into the kneader 13 as a part of the opened used paper.

The above-mentioned intermediate tank 15 is a tank for temporarily storing the kneaded product kneaded, in order to continuously operate the foaming device. The kneaded product is stirred with a stirrer 15a, and forcedly circulated with a pump 15b for circulation. Then, the kneaded product is transferred to the foaming device 16 with a supply pump 16a to the foaming device 16. In an apparatus in which two kneaders 13 having a structure approximately similar to the above-mentioned structure are disposed without installation of the intermediate tank, the production of the kneaded product which takes longer than the foaming step is alternately carried out, and the kneaded product is alternately supplied to the foaming device, so that the foaming device can be continuously operated more surely.

The above-mentioned foaming device 16 is an air mixer in which air is forcedly blown into the kneaded product with an air supply device not shown to mix, thereby producing the foamed product. A gas blown into the kneaded product herein to foam may be any, as long as it is a gas at ordinary temperature and pressure, and may be, for example, nitrogen, carbon dioxide or a mixture thereof, as well as air.

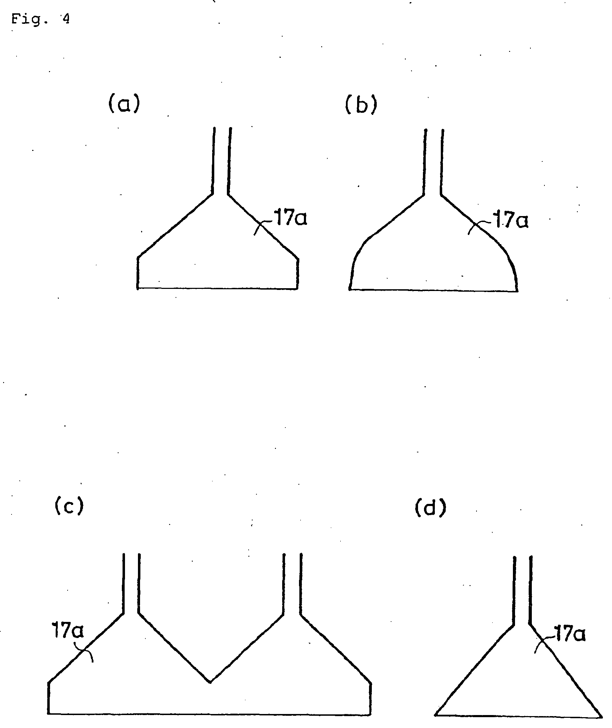

The above-mentioned molding machine 17 is an extruder for extrusion molding the foamed product to a sheet form, and has a nozzle unit 17a for extruding the foamed product toward an upper face of a tray, a plate-like substrate for molding, through an extrusion opening 17b, wherein the molding conveyer 18 and the nozzle unit 17a move relatively in a horizontal direction, and the width of the extrusion opening 17b of the nozzle unit 17a is at least approximately identical to the width of the plate-like foamed molding, as shown in Figs. 2 and 3. On an upper face of the molding conveyer 18, an aluminum tray on which a fluororesin-impregnated glass sheet is attached is placed. The nozzle unit 17a is preferably a nozzle widened toward the extrusion opening 17b having a specified thickness. The shapes of the divergent nozzles include a home base-like pentangular shape (a), a shape having R shoulders (b), a shape in which a plurality of divergent nozzles are connected in the width direction (c) and a triangular shape (d) in a front shape, as shown in Figs. 4(a) to 4 (d), which makes it possible to produce a wide foamed molding at one time, thereby improving productivity. Further, the elevation angle (α) of the divergent nozzle is from 30 to 85 degrees, and preferably from 40 to 60 degrees (Fig. 2).

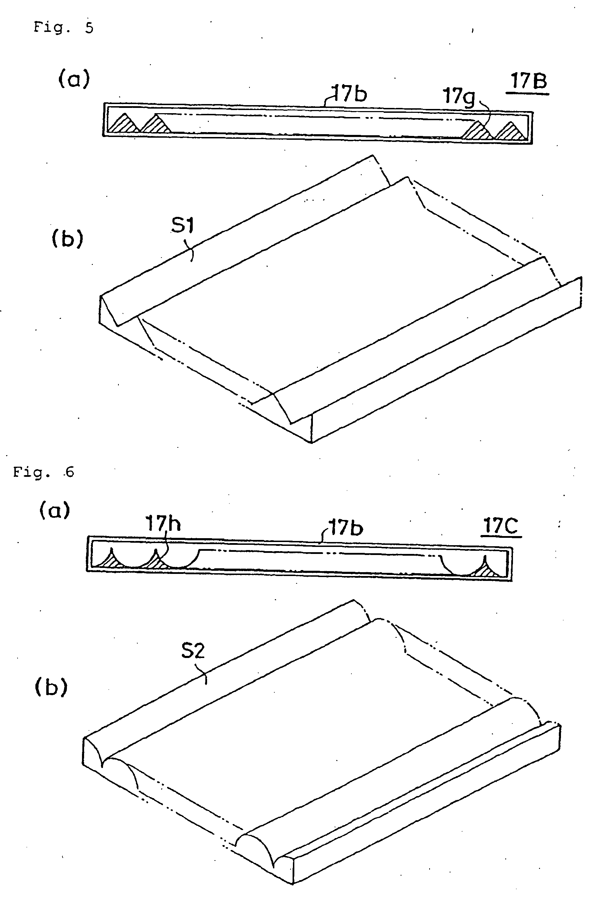

A flattening plate 17d for smoothly flattening the surface of the extruded foamed molding and adjusting the thickness in cooperation with the above-mentioned nozzle unit 17a is attached to the above-mentioned nozzle unit 17a, and the thickness of the foamed molding can be arbitrarily controlled by adjusting the height of the extrusion opening 17b of the nozzle unit 17a and the height of the flattening plate 17d in cooperation. Further, as shown in Fig. 5(a), a forming plate 17g having a continuous triangular shape is attached to an inner surface of a front plate of the extrusion opening 17b of the nozzle unit 17a, thereby being able to produce a foamed molding S1 having the shape of continuous convex ribs triangular in the cross section toward the width direction of a sheet on an upper face of the sheet, as shown in Fig. 5(b). Two sheets of the foamed molding S1 are laminated, bringing the continuous triangular shapes of the surfaces into mesh, thereby being able to produce easily a laminate high in strength, because it is difficult to slip and shock is dispersed. Further, as shown in Fig. 6(a), a forming plate 17h having a wavy shape with convex portions acutely angled and concave portions smoothly curved is attached to an inner surface of a front plate of the extrusion opening 17b of the nozzle unit 17a, thereby being able to produce a foamed molding S2 having the shape of continuous convex ribs circular in the cross section toward the width direction of a sheet on an upper face of the sheet, as shown in Fig. 6(b). This foamed molding S2 is increased in surface area, so that drying becomes easy, and the resulting foamed molding is high in strength, because shock is dispersed. The shape of the nozzle unit 17a shall not be limited to the above-mentioned shape.

Further, the nozzle unit 17a is vertically installed above the downstream portion of the molding conveyer 18, and specifically, it is supported in a vertical state with a pair of fixing frames 17c horizontally disposed at upper and lower portions on the front side thereof. Furthermore, the flattening plate 17d for flattening the surface of the foamed molding extruded from the extrusion opening 17b is horizontally fixed to a lower face of the fixing frame 17c on the lower portion side. This flattening plate 17d can smooth the surface of the foamed molding. Further, the lower face of this flattening plate 17d has a continuous triangular shape or a wavy shape, thereby being able to produce a foamed molding having the shape of continuous convex ribs triangular in the cross section or a foamed molding having the shape of continuous convex ribs circular in the cross section, on a surface of the foamed product. Furthermore, a runoff-preventing plate 17e for preventing the foamed product from running off is vertically disposed at a lower portion on the back of the nozzle unit 17a. This runoff-preventing plate 17e can prevent the occurrence of a solid fibrous material caused by pinching of the foamed product.

The above-mentioned molding conveyer 18 is a device for taking out the resulting foamed molding. The rack stacking device 19 is a device for stacking on a rack the foamed moldings taken out from the molding conveyer 18. The above-mentioned dryer 20 is a hot air dryer. Specifically, it mainly has a drying chamber 20a and a hot air generator 20b that is a heat exchanger. In the hot air generator 20b, the air blown in with a fan 20c is heated by vapor supplied via a different route, and the resulting hot air is blown into the drying chamber 20a. The rack-stacked foamed moldings housed in the drying chamber 20a are dried thereby.

The drying chamber 20a is equipped with a circulating fan 20d for the hot air and an exhaust fan 20e.

The above-mentioned foamed molding pusher 21 pushes out the rack-stacked product foamed moldings taken out from the dryer 20, to the outside, sheet by sheet, with a pushing cylinder 21a.

The method for producing the plate-like foamed moldings with the production apparatus 10 of the foamed moldings will be described below.

First, the used paper such as newspaper, magazines or corrugated cardboard is opened with the used paper opener 11, and the opened used paper passed through the screen of the opener 11 having an opening size of 1 to 15 mm is supplied to and stored in the opened used paper-storing hopper 12.

The used paper is supplied into an aqueous solution containing at least the binder, with which the vessel 13a of the kneader 13 is previously filled by means of the volumetric feeder 12a from the opened used paper-storing hopper 12. While the opened used paper, the aqueous solution and various chemicals supplied as needed are stirred and mixed by means of the stirrer 13b, a part of the mixture thereof is taken out with the pump 13c, and circulated to the vessel 13a, thereby producing the kneaded product.

A specific example of the kneading method using 10 kg of the used paper as the raw material will be shown herein.

First, 69.7 kg of an aqueous solution containing 3.7 kg of gelatin (jelly strength: 150 Bloom, fat and oil content: 0.1% by weight, degree of foaming: 10 mm) is supplied as the binder from the first hopper 14a to the vessel 13a, 7.5 kg of glycerol as the softening agent from the second hopper 14b, and 0.03 kg of the release agent from the third hopper 14c. Further, 37 g of potassium sorbate is added as the preservative from the fifth hopper 14h, followed by mixing.

The temperature at that time is 60°C.

The measurement of the jelly strength of the above-mentioned gelatin was made by the rheometer measuring method specified in JIS K6503, and the measurement of the fat and oil content was made by the acid decomposition method specified in JIS K6503. Further, in the measurement of the degree of foaming, 5 ml of a test solution having a temperature of 60 °C and a concentration of 10% by weight is collected in a test tube (internal diameter: 13 mmφ ± 1 mm), and stirred with a test tube mixer for 1 minute, allowing it to eccentrically circulate at 2, 800 rpm at a stroke of 10 mm. After the solution was thus stirred and foamed, an upper face and a lower face of a foamed layer were marked, and the test tube was immersed in a beaker maintained in hot water of 60°C. One minute after the standstill, the height of the foamed layer was measured, and the height of the foamed layer at that time was taken as the foaming height.

Then, 10 kg of the opened used paper is put in the aqueous solution in the vessel 13a from the opened used paper-storing hopper 12, and slowly stirred with the stirrer 13b at 45 rpm for about 10 minutes, thereby infiltrating various chemicals into the opened used paper and preventing the opened used paper from growing to a mount shape in the vessel 13a.

After the various materials have been thus completed, the stirring rate of the stirrer 13b is elevated to 90 rpm to allow the various chemicals to become accustomed to the opened used paper.

This stirring time is about 3 minutes.

Then, the stirring rate of the stirrer 13b is elevated to 120 rpm, and the mixing of the opened used paper with the various chemicals is initiated.

After about 1 minute, the pump 13c installed below the vessel 13a is operated. This initiates the circulation of the kneaded product and aids the uniform mixing. The circulation amount of the kneaded product is 10 L/minute.

After stirring and mixing for about 10 minutes in this state, 0.35 kg of the crosslinking reaction accelerator is supplied from the fourth hopper 14d. After further stirring and mixing for about 10 minutes, the kneading step is terminated.

In this case, when the opened used paper is put in, and then, the aqueous solution is supplied to conduct kneading, conversely to the above in the order of supply of the opened used paper, the aqueous solution and the like, the opened used paper sticks to an inner wall of the vessel 13a. It becomes therefore difficult to fluidize it. As a result, the uniform kneaded product can not be produced.

The resulting uniform kneaded product is temporarily stored in the intermediate tank 15, in order to continuously operate the foaming device 16. Also herein, the kneaded product is forcedly circulated with the pump 15b for circulation, while stirring it at a revolution of 15 rpm with the stirrer 15a.

Then,' the kneaded product in the intermediate tank 15 is supplied to the foaming device 16 with the supply pump 16a.

In the foaming device 16, air is forcedly blown into the kneaded product with an air supply device not shown to mix, thereby obtaining the foamed product.

In the foaming step, air is supplied to form uniform fine air bubbles. However, when the blowing amount of the air in the foaming device 16 is increased too much, it becomes impossible to hold fine air bubbles, resulting in the generation of depressions in a pockmark form on the surface of the foamed molding of the product to cause the poor appearance. The air is therefore entrained in the kneading step to restrict the blowing amount of the air in the foaming device 16, thereby being able to produce the foamed sheet of the product holding good .air bubbles. Accordingly, the blowing amount of the air is 0.8 NL/minute based on kg/minute of the kneaded product, and the foaming specific gravity of the mixture is 0.3 g/cm³, as used herein.

The resulting foamed product is transferred to the molding machine 17, and formed to the sheet-like foamed molding by extrusion molding. In this extrusion molding, the foamed product is extruded in a plate form from the extrusion opening 17b of the nozzle unit 17a onto the tray placed on the molding conveyer 18, and the foamed product which moves together with the driving of the molding conveyer 18 is equalized with the flattening plate 17d, thereby being able to obtain the plate-like foamed molding having a smooth surface. At this time, the plate-like foamed molding having a specified thickness can be obtained by adjusting the heights of the nozzle unit 17a and the flattening plate 17d from the tray.

Further, after the plate-like foamed molding produced in the above has been once dried, the operation of extruding the foamed product on an upper face of the above-mentioned plate-like foamed molding is further repeated, thereby being able to efficiently produce the laminated foamed molding having an arbitrary thickness. The production of the foamed molding having a thickness by the above-mentioned method decreases the shrinkage, even when a center portion thereof is different from an edge portion in the shrinkage percentage, so that it is not brought to a curved state caused by intermediate slack.

Then, the resulting foamed molding is cut to a specified size, and taken out by means of the molding conveyer 18. At a taking-out port of this molding conveyer 18, many sheets of the foamed moldings are stacked on the rack by the rack stacking device 19.

The scraps generated in cutting is once stored in the repulping tank 14f, and pumped again into the kneader 13 as a part of the opened used paper with the pump 14g.

The rack-stacked foamed moldings are placed in a box type dryer 20. Here, hot air drying is conducted at a constant temperature of 80°C. The drying time is from about 3 to 5 hours for a molded foamed product having a thickness of 5 mm, and from about 5 to 7 hours for a molded foamed product having a thickness of 10 mm. At about 110°C, drying of one having a thickness of 10 mm is terminated for about 2 to 3 hours. An increase in wind speed is also effective, and a 25% increase at 1 m/s brings about an about one-hour reduction in drying time. Although depending on the properties of the foamed product, a difference of 10°C in drying temperature corresponds to one hour in drying time. The drying temperature in this drying step is usually from 60 to 150°C, and preferably from 70 to 100°C. When the drying temperature is lower than 60°C, the time it takes to dry is too long, and the shrinkage percentage of the foamed molding increases. On the other hand, longer than 150°C results in the occurrence of composition changes in various components contained in the foamed molding to lower flexibility. In the case of the above-mentioned hot air dryer, it is preferred that the drying step is divided into two steps, the former drying (fixed rate) in which drying is conducted at a hot air drying temperature of 100°C ± 20°C for 50 to 80% of the total drying time and the latter drying (lapse rate) in which drying is conducted at 80°C ± 20°C for 20 to 50% of the total drying time. When the former drying is conducted at a low temperature outside the above-mentioned range, it takes a long time to dry, and the shrinkage percentage of the foamed molding increases. When it is conducted at a high temperature, composition changes in various components contained in the foamed molding occur to lower flexibility.

Further, when the latter drying is conducted at a low temperature outside the above-mentioned range, it takes a long time to dry. When it is conducted at a high temperature, composition changes in various components contained in the foamed molding occur to lower flexibility. Furthermore, when the hot air drying temperature of the latter drying step is established to a temperature higher than that of the former drying step, only a state in which the temperature of the product is slightly elevated is achieved, which causes poor drying efficiency. In the above, although the drying temperature is high, air is mixed in large amounts, which allows uniform foaming, and gelatin or the like mixed as the binder does not melt out.

The foamed molding of the product produced is relatively high in strength at an absolute dry specific gravity of 0.10 g/cm³, and the molding having good cushioning properties has been able to be obtained.

Further, from the graph showing the influence of the degree of foaming and jelly strength on the appearance of the product foamed molding and the graph showing the influence of the degree of foaming and jelly strength on the absolute dry specific gravity of the product foamed molding, a jelly strength of less than 130 Bloom results in the generation of depressions in a pockmark form on the surface of the foamed molding, thereby detracting it from the appearance as a product, and an increase in absolute dry specific gravity. Accordingly, there are the problems of high percent defective and a poor yield. Further, when the degree of foaming is less than 2 mm, it is clear that problems similar to those with respect to the above-mentioned jelly strength are encountered.

The foamed moldings produced in the above are used for various cushioning materials for packaging, seat sheets of automobiles, heat insulating materials, sound absorbing materials and the like.

The foamed molding produced by the method of the invention is a porous body in which paper and the like are mixed with the binder, so that it has the same functions as with conventional chemical resin foamed materials in applications of the heat insulating materials and sound absorbing materials. Furthermore, it also has together the function of absorbing the odor of a bad-smelling gas, and also has an application for odor absorbing materials.

Further, the product using the fibrous material such as the used paper as the raw material is composed of a natural product, so that it is easily biodegraded or biodisintegrated in the natural world, and generates no harmful substance in burning. Accordingly, it is excellent also from the viewpoint of environmental protection.

### Industrial Applicability

In the production of the wide, uniformly thick, plate-like foamed molding, no depressions in a pockmark form are generated on the surface thereof, there is no fear of detracting it from the appearance as the product, moreover it is made difficult to develop voids in the inside of the foamed molding, and the strength of the foamed molding can be increased. Further, the specific gravity of the foamed molding is decreased, and the yield in the production of a cushioning material and the like excellent in elastic performance is improved, thereby providing the apparatus and method for producing the foamed molding by which the foamed molding can be produced economically, continuously and in large amounts, and the foamed molding produced thereby.

## Claims

1. A method for producing a foamed molding comprising
a kneading step of kneading a fibrous material with an aqueous solution to produce a kneaded product,
a foaming step of foaming the kneaded product kneaded in the kneading step by forcedly blowing a gas into the kneaded product to produce a foamed product, wherein the specific gravity of a mixture in the foaming step is from 0.15 to 0.45 g/cm³,
a molding step of molding the foamed product foamed in the foaming step into a specified shape to produce a molding, and
a drying step of drying the molding molded in the molding step, at a drying temperature of 60 to 150°C,
**characterized in that**, in the kneading step, the fibrous material is kneaded with the aqueous solution in which a binder mainly composed of gelatin and/or glue having a jelly strength of 130 Bloom, measured in accordance with JIS K6503, or more is dissolved, followed by the foaming and molding.

2. The method according to claim 1, wherein the kneading step comprises kneading the fibrous material with the aqueous solution by means of a plurality of kneaders (13) to produce the kneaded product, and
the foaming step comprises foaming the kneaded product alternately supplied from the plurality of kneaders (13) to produce the foamed product.

3. The method according to claim 1 or 2, wherein in the kneading step, the kneader(s) (13) is/are filled with an aqueous solution in which at least a binder is dissolved, and the fibrous material is gradually added to the aqueous solution with stirring to conduct kneading.

4. The method according to any one of claims 1 to 3, wherein a molding machine (17) in the molding step has a nozzle unit (17a) extruding the foamed product toward an upper face of a plate-like substrate (18) for molding through an extrusion opening (17b) and having a width approximately identical to the width of the plate-like foamed molding, the plate-like substrate (18) and the nozzle unit (17a) are relatively moved in a horizontal direction to produce the plate-like foamed molding, the plate-like foamed molding is once dried, and then an operation of extruding the foamed product to an upper face of the plate-like foamed molding is repeated, thereby producing a laminated foamed molding having a specific thickness.

5. The method according to any one of claims 1 to 4, wherein fabric is laid on the plate-like substrate, and the foamed product is extruded thereon.

6. The method according to claim 5, wherein the fabric is paper or a board.

7. The method according to claim 6, wherein the paper is previously wetted.

8. The method according to claim 6 or 7, wherein the fabric is the board having a rugged shape, and the foamed product is extruded thereon to coat it to a thickness exceeding the height of concave portions of the rugged shape.

9. The method according to any one of claims 1 to 8, wherein a dryer (20) in the drying step is a hot air dryer, the drying step is divided into the former drying step in which drying is conducted at a hot air drying temperature of 100°C +/- 20°C for 50 to 80% of the total drying time and the latter drying step in which drying is conducted at 80°C +/-20°C for 20 to 50% of the total drying time, and at least, the hot air drying temperature of the latter drying step is established to be lower than that of the former drying step.

10. The method according to any one of claims 1 to 8, wherein as the drying in the drying step, microwave drying is conducted under conditions of a microwave capacity of 0.7 to 2.5 kW/kg based on the weight of the molding before the drying.

11. The method according to any one of claims 1 to 8, wherein as the drying step, the hot air dryer according to claim 9 and the microwave drying according to claim 10 are used in combination with each other.

12. The method according to any one of claims 1 to 11, wherein the foamed product is first extruded from a molding machine onto an endless belt having the release property to form a plate-like molding, then, cold air is blown on a surface of this plate-like molding to dry or solidify, and further, it is placed on a plate-like substrate in an inverted state.

13. The method according to any one of claims 1 to 12, wherein the binder has a fat and oil content of 0.3% by weight or less.

14. The method according to any one of claims 1 to 13, wherein the foaming height of the binder at the time when one minute has elapsed after a test solution is stirred at a specified concentration of the test solution is 2 mm or more.

15. The method according to claim 14, wherein the test solution is an aqueous solution extracted from the fibrous material at the amount of water of a specified ratio or more at which the fibrous material and water are subjected to kneading.

16. The method according to any one of claims 1 to 15, wherein at least one selected from the group consisting of a crosslinking accelerator, a softening agent, a release agent, a surfactant, an antibacterial agent, a PH regulator, a PH buffer, a foaming agent, an antifungal agent, a coloring agent, a bleaching agent, an antioxidant, a weatherproofing (lightproofing) agent, a frame retardant and a filling agent, as well as the binder, is added to the aqueous solution.

17. The method according to claim 16, wherein the antibacterial agent is potassium sorbate, and the amount thereof added is from 0.7 to 3% by weight based on the binder.

18. The method according to claim 16 or 17, wherein the surfactant is added in such an amount that the foaming height at the time when one minute has elapsed after the test solution is stirred reaches a desired height of 2 mm or more at the specified concentration of the test solution in claim 15 or 16.

19. The method according to any one of claims 1 to 18, wherein the PH of the aqueous solution of the binder is within the range of 4.5 to 6.5.

20. The method according to any one of claims 1 to 19, wherein the fibrous material used in the method is selected from woolen fabric, waste wool, pulp sludge, glass fiber and used paper.

## Patentansprüche

1. Verfahren zur Herstellung eines geschäumten Formteils, umfassend:
einen Knetschritt in Form eines Verknetens eines faserförmigen Materials mit einer wässrigen Lösung, um ein Knetprodukt zu erzeugen,
einen Schäumungsschritt in Form eines Schäumens des im Knetschritt gekneteten Knetprodukts durch erzwungenes Einblasen eines Gases in das Knetprodukt, um ein Schaumprodukt zu erzeugen, wobei die spezifische Dichte eines Gemischs in dem Schäumungsschritt 0.15 bis 0.45 g/cm³ beträgt,
einen Formgebungsschritt in Form eines Formens des im Schäumungsschritt geschäumten Schaumprodukts in eine festgelegte Form, um ein Formteil zu erzeugen, und
einen Trocknungsschritt in Form eines Trocknens des im Formgebungsschritt geformten Formteils bei einer Trocknungstemperatur von 60 bis 150°C,
**dadurch gekennzeichnet, dass** im Knetschritt das faserförmige Material mit der wässrigen Lösung, in welcher ein hauptsächlich aus Gelatine und/oder Klebemittel mit einer Gelierstärke von 130 Bloom oder mehr, gemessen in Übereinstimmung mit JIS K6503, bestehendes Bindemittel gelöst ist, verknetet wird, gefolgt vom Schäumen und Formen.

2. Verfahren nach Anspruch 1, wobei der Knetschritt zur Erzeugung des Knetprodukts das Verkneten des faserförmigen Materials mit der wässrigen Lösung unter Verwendung einer Vielzahl von Knetvorrichtungen (13) umfasst, und
der Schäumungsschritt zur Erzeugung des Schaumprodukts das Schäumen des aus der Vielzahl von Knetvorrichtungen (13) abwechselnd bereitgestellten Knetprodukts umfasst.

3. Verfahren nach Anspruch 1 oder 2, wobei in dem Knetschritt die Knetvorrichtung(en) (13) mit einer wässrigen Lösung befüllt ist/sind, in welcher zumindest ein Bindemittel gelöst ist, und das faserförmige Material zur Durchführung des Knetvorgangs unter Rühren schrittweise zu der wässrigen Lösung hinzugefügt wird.

4. Verfahren nach einem der Ansprüche 1 bis 3, wobei in dem Formgebungsschritt eine Formgebungsvorrichtung (17) ein Düsenelement (17a)aufweist, welches das Schaumprodukt in Richtung einer Oberseite eines plattenartigen Substrats (18) zur Formgebung durch eine Extrusionsöffnung (17b) extrudiert und welches eine Breite besitzt, die in etwa der Breite des plattenartigen geschäumten Formteils entspricht, wobei das plattenartige Substrat (18) und das Düsenelement (17a) zur Erzeugung des plattenartigen geschäumten Formteils in horizontaler Richtung relativ zueinander bewegt werden, das plattenartige geschäumte Formteil einmal getrocknet wird, und anschließend ein Arbeitsgang des Extrudierens des Schaumprodukts auf eine Oberseite des plattenartigen geschäumten Formteils wiederholt wird, wodurch ein laminiertes geschäumtes Formteil mit spezifischer Dicke erzeugt wird.

5. Verfahren nach einem der Ansprüche 1 bis 4, wobei der Stoff auf das plattenartige Substrat gelegt und das Schaumprodukt hierauf extrudiert wird.

6. Verfahren nach Anspruch 5, wobei der Stoff Papier oder eine Pappe ist.

7. Verfahren nach Anspruch 6, wobei das Papier vorab angefeuchtet wird.

8. Verfahren nach Anspruch 6 oder 7, wobei der Stoff eine Pappe mit unebenem Profil ist und das Schaumprodukt unter Bereitstellung einer Beschichtung in einer Dicke, welche die Höhe der konkaven Bereiche des unebenen Profils überschreitet, hierauf extrudiert wird.

9. Verfahren nach einem der Ansprüche 1 bis 8, wobei ein Trockner (20) in dem Trocknungsschritt ein Heißlufttrockner ist, der Trocknungsschritt in einen ersten Trocknungsschritt, in welchem bei einer Heißlufttrocknungstemperatur von 100°C +/- 20°C für 50 bis 80% der Gesamttrocknungsdauer getrocknet wird, und einen zweiten Trocknungsschritt, in welchem bei 80°C +/- 20°C für 20 bis 50% der Gesamttrocknungsdauer getrocknet wird, unterteilt wird, und zumindest die Heißlufttrocknungstemperatur des zweiten Trocknungsschritts niedriger ist als jene des ersten Trocknungsschritts.

10. Verfahren nach einem der Ansprüche 1 bis 8, wobei als Trocknung in dem Trocknungsschritt eine Mikrowellentrocknung unter Bedingungen einer Mikrowellenkapazität von 0.7 bis 2.5 kW/kg, bezogen auf das Gewicht des Formteils vor der Trocknung, vorgenommen wird.

11. Verfahren nach einem der Ansprüche 1 bis 8, wobei im Trocknungsschritt eine Kombination des Heißlufttrockners nach Anspruch 9 und der Mikrowellentrocknung nach Anspruch 10 verwendet wird.

12. Verfahren nach einem der Ansprüche 1 bis 11, wobei das Schaumprodukt zunächst von einer Formgebungsvorrichtung aus auf ein Endlosband mit Ablöseeigenschaft extrudiert wird, um ein plattenartiges Formteil zu bilden, anschließend Kaltluft auf eine Oberfläche dieses plattenartigen Formteils geblasen wird, um es zu trocknen oder zu verfestigen, und es weiterhin in einem invertierten Zustand auf ein plattenartiges Substrat platziert wird.

13. Verfahren nach einem der Ansprüche 1 bis 12, wobei das Bindemittel einen Fett- und Ölgehalt von 0.3 Gew.-% oder weniger aufweist.

14. Verfahren nach einem der Ansprüche 1 bis 13, wobei die Aufschäumhöhe des Bindemittels an einem Zeitpunkt, an dem eine Testlösung bei einer festgelegten Konzentration der Testlösung für eine Minute gerührt worden ist, 2 mm oder mehr beträgt.

15. Verfahren nach Anspruch 14, wobei die Testlösung eine wässrige Lösung ist, welche aus dem faserförmigen Material unter Verwendung einer Menge an Wasser extrahiert worden ist, die dem beim Verkneten des faserförmigen Materials mit Wasser festgelegten Anteil entspricht oder größer als dieser ist.

16. Verfahren nach einem der Ansprüche 1 bis 15, wobei zumindest eines ausgewählt aus der Gruppe bestehend aus einem Vernetzungsbeschleuniger, einem Erweichungsmittel, einem Trennmittel, einem oberflächenaktiven Mittel, einem antibakteriellen Mittel, einem pH-Regulator, einem pH-Puffer, einem Schaummittel, einem antimykotischen Mittel, einem Färbemittel, einem Bleichmittel, einem Antioxidationsmittel, einem Witterungsschutzmittel (Lichtschutzmittel), einem Flammschutzmittel und einem Füllmittel, sowie das Bindemittel zu der wässrigen Lösung hinzugefügt werden.

17. Verfahren nach Anspruch 16, wobei das antibakterielle Mittel Kaliumsorbat ist und die hiervon hinzugefügte Menge 0.7 bis 3% Gew.-%, bezogen auf das Bindemittel, beträgt.

18. Verfahren nach Anspruch 16 oder 17, wobei das oberflächenaktive Mittel in einer Menge hinzugefügt wird, welche derart gewählt ist, dass die Aufschäumhöhe an einem Zeitpunkt, an dem die Testlösung für eine Minute gerührt worden ist, bei der festgelegten Konzentration der Testlösung gemäß Anspruch 15 oder 16 eine gewünschte Höhe von 2 mm oder mehr erreicht.

19. Verfahren nach einem der Ansprüche 1 bis 18, wobei der pH der wässrigen Lösung des Bindemittels im Bereich von 4.5 bis 6.5 liegt.

20. Verfahren nach einem der Ansprüche 1 bis 19, wobei das in dem Verfahren verwendete faserförmige Material aus Wollgewebe, Ausschusswolle, Zellstoffschlamm, Glasfaserstoff und Altpapier ausgewählt ist.

## Revendications

1. Procédé de production d'une pièce moulée alvéolaire, comprenant
un stade de malaxage d'une matière fibreuse avec une solution aqueuse pour produire un produit malaxé,
un stade de moussage du produit malaxé dans le stade de malaxage en insufflant à force un gaz dans le produit malaxé pour produire un produit alvéolaire, la masse volumique d'un mélange dans le stade de moussage allant de 0,15 à 0,45 g/cm³,
un stade de moulage du produit alvéolaire, rendu alvéolaire dans le stade de moussage, en la forme spécifiée pour produire une pièce moulée et
un stade de séchage à une température de séchage de 60 à 150°C de la pièce moulée dans le stade de moulage,
**caractérisé en ce que**, dans le stade de malaxage, on malaxe la matière fibreuse avec la solution aqueuse, dans laquelle est dissout un liant composé principalement de gélatine et/ou de colle ayant une force de gelée de 130 Bloom, mesurée suivant JIS K6503, ou plus, qu'on fait suivre du moussage et du moulage.

2. Procédé suivant la revendication 1, dans lequel le stade de malaxage comprend le malaxage de la matière fibreuse avec la solution aqueuse au moyen d'une pluralité de malaxeurs (13) pour produire le produit malaxé et
le stade de moussage comprend rendre alvéolaire le produit malaxé, fourni en alternance par la pluralité de malaxeurs (13), pour produire le produit alvéolaire.

3. Produit suivant la revendication 1 ou 2, dans lequel, dans le stade de malaxage, le malaxeur ou les malaxeurs (13) est/sont emplis d'une solution aqueuse, dans laquelle est dissout au moins un liant, et on ajoute la matière fibreuse peu à peu à la solution aqueuse, tout en agitant pour effectuer le malaxage.

4. Procédé suivant l'une quelconque des revendications 1 à 3, dans lequel une machine (17) de moulage, dans le stade de moulage, a une unité (17a) de filière extrudant le produit alvéolaire en direction d'une face supérieure d'un substrat (18) analogue à une plaque pour mouler par une ouverture (17b) d'extrusion et ayant une largeur à peu près identique à la largeur de la pièce alvéolaire analogue à une plaque, le substrat (18) analogue à une plaque et l'unité (17a) de filière étant déplacés relativement dans une direction horizontale pour produire la pièce moulée alvéolaire analogue à une plaque, la pièce moulée alvéolaire analogue à une plaque étant ensuite séchée, puis une opération d'extrusion du produit alvéolaire sur une surface supérieure de la pièce moulée alvéolaire analogue à une plaque étant répétée, en produisant ainsi une pièce alvéolaire stratifiée d'une épaisseur précise.

5. Procédé suivant l'une quelconque des revendications 1 à 4, dans lequel on met une étoffe sur le substrat analogue à une plaque et on y extrude le produit alvéolaire.

6. Procédé suivant la revendication 5, dans lequel l'étoffe est du papier ou un carton.

7. Procédé suivant la revendication 6, dans lequel le papier a été mouillé au préalable.

8. Procédé suivant la revendication 6 ou 7, dans lequel l'étoffe est le carton ayant de la rugosité et le produit alvéolaire y est extrudé pour le revêtir jusqu'à une épaisseur dépassant la hauteur des parties concaves de la rugosité.

9. Procédé suivant l'une quelconque des revendications 1 à 8, dans lequel un sécheur (20) dans le stade de sécheur est un sécheur à air chaud, le stade de séchage étant subdivisé en le premier stade de séchage, dans lequel on effectue le séchage à une température de séchage par de l'air chaud de 100°C +/-20°C pendant 50 à 80% de la durée totale de séchage, et le dernier stade de séchage, dans lequel on effectue le séchage à 80°C +/-20°C pendant 20 à 50% de la durée totale de séchage et au moins la température de séchage par de l'air chaud du dernier stade de séchage est plus basse que celle du premier stade de séchage.

10. Procédé suivant l'une quelconque des revendications 1 à 8, dans lequel, comme séchage dans le stade de séchage, on effectue un séchage par micro-ondes dans les conditions d'une capacité de micro-ondes de 0,7 à 2,5 kW/kg sur la base du poids de la pièce moulée avant le séchage.

11. Procédé suivant l'une quelconque des revendications 1 à 8, dans lequel, comme stade de séchage, on utilise le sécheur par de l'air chaud suivant la revendication 9 et le séchage par micro-ondes suivant la revendication 10 en combinaison l'un avec l'autre.

12. Procédé suivant l'une quelconque des revendications 1 à 11, dans lequel on extrude d'abord le produit alvéolaire d'une machine de moulage sur un tapis sans fin ayant la propriété de démoulage pour former une pièce moulée analogue à une plaque, puis on insuffle de l'air froid sur une surface de cette pièce moulée analogue à une plaque pour la sécher ou la solidifier et, en outre, on la place sur un substrat analogue à une plaque à l'état à l'envers.

13. Procédé suivant l'une quelconque des revendications 1 à 12, dans lequel le liant a une teneur en matière grasse et en huile inférieure ou égale à 0,3% en poids.

14. Procédé suivant l'une quelconque des revendications 1 à 13, dans lequel la hauteur de moussage du liant, à l'instant où une minute s'est écoulée après qu'une solution d'essai est agitée à une concentration spécifiée de la solution d'essai, est supérieure ou égale à 2 mm.

15. Procédé suivant la revendication 14, dans lequel la solution d'essai est une solution aqueuse extraite de la matière fibreuse à la quantité d'eau égale ou supérieure à un rapport spécifié, auquel la matière fibreuse et l'eau sont soumises pour le malaxage.

16. Procédé suivant l'une quelconque des revendications 1 à 15, dans lequel au moins l'un choisi dans le groupe consistant en un accélérateur de réticulation, un agent plastifiant, un agent de démoulage, un agent tensioactif, un agent antibactérien, un régulateur de PH, un tampon de PH, un agent porogène, un agent antifongique, un agent colorant, un agent de blanchiment, un antioxydant, un agent donnant de la solidité aux intempéries (solidité à la lumière), un agent ignifugeant et une charge, ainsi que le liant, est ajouté à la solution aqueuse.

17. Procédé suivant la revendication 16, dans lequel l'agent antibactérien est du sorbate de potassium et la quantité qui en est ajoutée représente de 0,7 à 3% du poids du liant.

18. Procédé suivant la revendication 16 ou 17, dans lequel on ajoute l'agent tensioactif en une quantité telle que la hauteur de moussage à l'instant où une minute s'est écoulée, après que la solution d'essai est agitée, atteint une hauteur souhaitée supérieure ou égale à 2 mm à la concentration spécifiée de la solution d'essai à la revendication 15 ou 16.

19. Procédé suivant l'une quelconque des revendications 1 à 18, dans lequel le PH de la solution aqueuse du liant est dans la plage allant de 4,5 à 6,5.

20. Procédé suivant l'une quelconque des revendications 1 à 19, dans lequel on choisit la matière fibreuse utilisée dans le procédé parmi une étoffe de laine, des restes de laine, des boues de pâte à papier, de la fibre de verre et du vieux papier.
